# FASCICULE DE BREVET EUROPEEN

(11) **EP 1 780 980 B1**
(45) Date de publication et mention de la délivrance du brevet: **18.01.2012**
(21) Numéro de dépôt: 07102262.8
(22) Date de dépôt: 04.03.2005
(51) Int. Cl.: H04L 29/06, H04L 12/46

(54) **Dispositif et procédé de traitement de trames à champ à utilisation multiprotocolaire, pour un réseau de communications**
Vorrichtung und Verfahren zur Bearbeitung von Rahmen mit Multiprotokollverwendungsfeldern für ein Kommunikationsnetzwerk
Device and method for a treatment of frames with multiprotocol usage field for a communication network

(30) Priorité: 09.03.2004 FR 0450472
(43) Date de publication de la demande: 02.05.2007
(62) Demande divisionnaire de: 05290491.9
(73) Titulaire: Alcatel Lucent, 75008 Paris (FR)
(72) Inventeur: CIAVAGLIA, Laurent, 92120 Montrouge (FR); DOTARO, Emmanuel, 91370, VERRIERES LE BUISSON (FR)
(74) Mandataire: Thibaud, Jean-Baptiste

(56) Documents cités:
- US-A1- 2002 167 898
- J. REYNOLDS ET AL.: "RFC 1700: Assigned Numbers" IETF RFC PUBLICATION, PAGES 1, 16, 54, 168-171, 176-178, [Online] octobre 1994 (1994-10), XP002302087 INTERNET Extrait de l'Internet: URL:ftp://ftp.isi.edu/in-notes/rfc1700.txt > [extrait le 2004-10-20]
- E. ROSEN ET AL.: "RFC 3031: Multiprotocol Label Switching Architecture (MPLS)" RFC-PUBLICATION, [Online] janvier 2001 (2001-01), pages 1-11, XP002302088 INTERNET Extrait de l'Internet: URL:ftp://ftp.isi.edu/in-notes/rfc3031.txt > [extrait le 2004-10-20]
- CHARLES HORNIG SYMBOLICS CAMBRIDGE RESEARCH CENTER: "A Standard for the Transmission of IP Datagrams over Ethernet Networks; rfc894.txt", IETF STANDARD, INTERNET ENGINEERING TASK FORCE, IETF, CH, 1 April 1984 (1984-04-01), XP015006885, ISSN: 0000-0003

## Description

L'invention concerne le domaine des réseaux de communications, et plus précisément le traitement de trames de données au sein de tels réseaux.

Comme le sait l'homme de l'art, un certain nombre de techniques permettent à des réseaux, utilisant des protocoles de communication différents, d'échanger des données incluses dans des trames et d'assurer des services. Parmi ces techniques, on peut notamment citer l'encapsulation, qui permet à des réseaux différents de communiquer entre eux, et la conversion (ou mise en correspondance) qui permet à des réseaux de mettre en oeuvre des services offerts par d'autres réseaux.

Afin de permettre l'ajout de nouvelles caractéristiques ou fonctionnalités protocolaires, les techniques utilisées ont tendance à additionner ou empiler les champs de trame spécifiques à chaque protocole les uns au dessus des autres. Cela requiert en outre certaines modifications de la mise en oeuvre standard des protocoles. Or, ces techniques ont pour conséquence de dupliquer les informations de contrôle dans chaque unité de données de protocole (ou PDU pour « Protocol Data Unit »), ce qui provoque un surdébit substantiel, génère des obstacles à I"'interfonctionnement" (ou "interopérabilité") des équipements de réseau et/ou à l'interconnectivité des réseaux et accroît la complexité de gestion des trames.

Le RFC 1700 divulgue la possibilité d'utiliser un champ de trame de façon différente.

L'invention a donc pour but d'améliorer la situation.

L'invention a pour objet un procédé conforme à la revendication 1.

D'autres caractéristiques et avantages de l'invention apparaîtront à l'examen de la description détaillée ci-après, et des dessins annexés, sur lesquels :
- la figure 1 illustre de façon schématique un routeur équipé d'un exemple de réalisation d'un dispositif de traitement de trames selon l'invention, de type distribué,
- la figure 2 illustre de façon schématique un exemple de trame de données à double encapsulation, de type classique, et
- la figure 3 illustre de façon schématique un exemple de trame de données selon l'invention.

Les dessins annexés pourront non seulement servir à compléter l'invention, mais aussi contribuer à sa définition, le cas échéant.

L'invention a pour objet de permettre l'utilisation du champ de protocole VLAN pour coder une information ou une fonctionnalité, nécessaire au support par un réseau du protocole GMPLS.

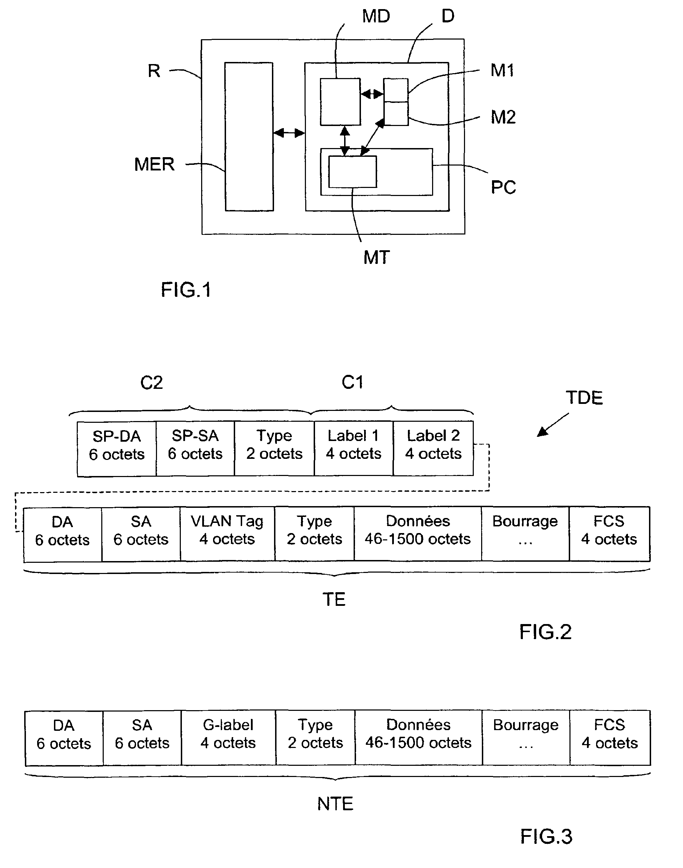

L'invention propose à cet effet d'équiper chaque réseau de communications d'au moins un dispositif de traitement de trames de données D, par exemple du type de celui illustré sur la figure 1.

Par ailleurs, l'invention peut être mise en oeuvre soit sous une forme centralisée, soit sous une forme distribuée. Dans un cas comme dans l'autre, les dispositifs D selon l'invention doivent être raccordés aux, ou implantés au moins partiellement dans, les équipements (ou noeuds) de réseau R chargés de router ou commuter les trames de données au sein du réseau, comme par exemple les routeurs ou les commutateurs.

On considère dans ce qui suit, à titre d'exemple illustratif, qu'un premier réseau Ethernet est raccordé à un second réseau à protocole Internet (ou IP).

Considérée au sein du premier réseau (ici Ethernet), l'invention consiste tout d'abord à identifier (ou choisir) parmi les champs qui constituent les trames de données au format du protocole Ethernet, et plus précisément l'un des champs de contrôle du protocole qui constituent ce que l'homme de l'art appelle les unités de données de protocole (ou PDU pour « Protocol Data Unit »), celui qui sert à assurer un traitement protocolaire particulier pour ledit protocole Ethernet.

On identifie le champ dit « Ethernet VLAN Tag », chargé de définir des sous-réseaux virtuels au sein d'un même domaine Ethernet en distinguant les différents sous-réseaux par un identifiant appelé « VLAN Tag ».

Puis, on associe à ce champ de trame choisi au moins deux ensembles de valeurs (ou intervalles de valeurs dans le cas le plus simple) correspondant respectivement à son traitement protocolaire natif (ou un nouveau traitement protocolaire de substitution), pour le protocole Ethernet, et à un traitement protocolaire différent, pour un autre protocole ou service que l'on souhaite voir supporté ou mis en oeuvre par le premier réseau Ethernet.

Cet autre protocole ou service est GMPLS (pour « Generalized Multi Protocol Label Switching »).

Le premier ensemble de valeur correspond aux différentes valeurs que peut prendre le champ Ethernet VLAN Tag, tandis que le second ensemble de valeur correspond aux différentes valeurs que peut prendre le champ GMPLS label selon le protocole GMPLS.

Une fois les ensembles définis, on les stocke dans une mémoire M1 du dispositif D. Il peut bien sûr s'agir d'une mémoire spécifique ou d'un espace mémoire réservé à cet effet et contenu dans une mémoire partagée entre plusieurs fonctions.

Ce dernier comporte à cet effet, tout d'abord, des moyens de détection implantés, de préférence sous la forme de modules MD, dans chaque noeud R du premier réseau Ethernet. Chaque module de détection MD est chargé d'observer chaque trame qui parvient au niveau du module d'émission / réception MER du noeud R dans lequel il est implanté, afin de déterminer la valeur du champ de trame Ethernet VLAN Tag. Une fois la valeur déterminée, le module de détection MD accède à la mémoire M1 pour déterminer l'ensemble de valeurs auquel il appartient.

Le dispositif D comporte par ailleurs des moyens de traitement qui peuvent être soit centralisés dans un équipement de gestion du réseau, soit distribués sous la forme de modules de traitement MT dans chaque noeud R comportant un module de détection MD, comme illustré sur la figure 1.

En d'autres termes, le premier réseau Ethernet peut comporter soit un dispositif D distribué dans chaque noeud R, pour ce qui concerne ses modules de détection MD, et dans un équipement de gestion pour ce qui concerne son module de traitement MT, soit une multiplicité de dispositifs D comportant à la fois un module de détection MD et un module de traitement MT et implantés chacun dans un noeud R de manière à traiter localement les trames reçues, comme c'est le cas dans l'exemple illustré sur la figure 1.

Lorsque chaque noeud R est équipé d'un dispositif D complet, le module de traitement MT est chargé de déterminer le traitement protocolaire spécifique qui correspond à l'ensemble qui a été déterminé par le module de détection MD associé, et qui doit être appliqué à la trame reçue. Pour ce faire, le dispositif D comprend préférentiellement une mémoire (ou espace mémoire réservé) M2, couplée au module de traitement MT, et dans laquelle est stockée une première table de correspondance entre les identifiants des ensembles de valeurs (stockées dans la mémoire M1) et les traitements protocolaires associés.

Certains de ces traitements peuvent correspondre, éventuellement au sein d'une autre table, à des valeurs protocolaires dédiées destinées à remplacer une valeur de champ de trame choisi, contenu dans une trame reçue. Par exemple, un traitement protocolaire, correspondant à un ensemble de valeurs, peut consister à déterminer dans une table de labels du noeud R, à l'aide du module de traitement MT, l'identifiant de LSP qui identifie la connexion LSP avec le noeud suivant sur le chemin de la trame reçue.

Il est avantageux que chaque dispositif D dispose de sa propre table de labels, étant donné que les labels ont fréquemment une signification locale et/ou temporaire associée à deux noeuds du réseau. De la sorte, un même ensemble de valeurs peut correspondre au sein de deux noeuds distants à un même traitement protocolaire, mais à des valeurs protocolaires (identifiants LSP) différentes.

Lorsque le réseau ne comprend qu'un unique module de traitement MT centralisé, ce dernier est chargé de déterminer le traitement protocolaire spécifique, qui correspond à l'ensemble qui a été déterminé par l'un des modules de détection MD implanté dans l'un des routeurs R qu'il supervise, et qui doit être appliqué à la trame que ce routeur R a reçue. La détermination du traitement protocolaire est identique à celle décrite ci-avant, si ce n'est que la mémoire M2 contenant la table de correspondance identifiants d'ensemble/traitements protocolaires est préférentiellement stockée dans le serveur de gestion dans lequel est implanté le module de traitement MT. Il est plus commode que le serveur de gestion dispose de la mémoire M2, mais cela n'est pas obligatoire. Le module de traitement MT centralisé peut en effet récupérer les valeurs stockées dans la mémoire M2 en même temps que les informations sur la trame reçue à traiter.

Chaque module de détection MD est préférentiellement agencé de manière à remplacer, dans la mémoire M1 qui lui est associée, les valeurs qui définissent l'un au moins des ensembles dont il assure la détection. Il peut également être agencé de manière à ajouter dans la mémoire M1 qui lui est associée, un nouvel ensemble de valeurs. Ce remplacement ou cet ajout est effectué en fonction d'instructions reçues préférentiellement du plan de contrôle du réseau PC, lequel est soit centralisé, par exemple dans un serveur de gestion, soit distribué dans chaque noeud R, comme illustré sur la figure 1.

Il est important de noter qu'un plan de contrôle PC distribué peut faire partie intégrante d'un dispositif D, comme illustré, ou qu'en variante un module de traitement MT distribué peut constituer tout ou partie d'un plan de contrôle PC distribué.

Par ailleurs, chaque module de traitement MT est préférentiellement agencé de manière à remplacer, dans la mémoire M2 qui lui est associée, le traitement protocolaire qui est associé à l'un au moins de ses ensembles. Il peut également être agencé de manière à ajouter dans la mémoire M2 qui lui est associée, un traitement protocolaire qui est associé à un nouvel ensemble. Ce remplacement ou cet ajout est effectué en fonction d'instructions reçues préférentiellement du plan de contrôle du réseau PC, présenté ci-avant.

La mise à jour des contenus des mémoires M1 et M2 peut se faire dynamiquement, et de façon périodique ou bien chaque fois qu'une modification est décidée par l'opérateur du réseau.

Grâce à l'invention, on peut désormais changer la sémantique d'une partie choisie de la PDU d'une trame en fonction de sa valeur. Ainsi, un noeud R peut gérer plusieurs protocoles et/ou services différents sur une même interface, à un même instant (paquet après paquet), et avec un unique protocole hôte. L'infrastructure d'un réseau Ethernet n'a donc pas besoin d'être modifiée pour permettre audit réseau de supporter un ou plusieurs autres protocoles et/ou nouveaux services que celui ou ceux pour lequel il a été initialement conçu, exception faite des moyens de traitement qui doivent être adaptés aux nouveaux traitements protocolaires envisagés (comme être capables de gérer les labels GMPLS (ou G-labels)). En particulier, le protocole hôte du réseau n'a pas besoin d'être modifié ou adapté, puisque seul le traitement protocolaire de l'un au moins des champs de contrôle est changé conformément à la configuration du plan de contrôle PC qui est transparente aux fonctions de bas niveau.

On se réfère maintenant aux figures 2 et 3 pour comparer, à l'aide d'un exemple, la différence entre une trame de données de l'art antérieur et une trame de données selon l'invention.

On a représenté sur la figure 2 un exemple de trames de données TDE de l'art antérieur permettant le transport de données dans un réseau Ethernet, dans le cas d'une double encapsulation de type IP/MPLS. Plus précisément, la trame Ethernet TE, contenant les données à transporter, est encapsulée à l'aide d'une première « capsule » C1 constituée de deux champs de contrôle MPLS (Label 1 et Label 2, chacun constitués de quatre octets), elle-même encapsulée à l'aide d'une seconde « capsule » C2 constituée de trois champs d'entête de la trame Ethernet pour le transport (SP-DA (adresse destination), SP-SA (adresse source) et Type, constitués respectivement de six octets, six octets et deux octets).

La trame Ethernet TE encapsulée comprend classiquement un champ DA de six octets, un champ SA de six octets, un champ VLAN Tag de quatre octets, un champ type de deux octets, un champ de données comportant entre quarante six et mille cinq cents octets, un champ de bourrage (ou « padding ») dont le nombre d'octets varie selon le nombre d'octets du champ de données, et un champ FCS de quatre octets.

Dans un réseau selon l'invention, la double encapsulation de la trame Ethernet TE n'a plus lieu d'être, puisque l'on peut utiliser le champ VLAN Tag pour véhiculer les informations de contrôle d'un champ de type GMPLS label . Par conséquent, la trame de données TDE de la figure 2 se présente désormais sous la forme illustrée sur la figure 3, c'est-à-dire sous la forme d'une nouvelle trame Ethernet NTE dans laquelle le champ VLAN Tag sert à la fois à sa fonction native, qui correspond à un premier ensemble de valeurs, et à un Label GMPLS (ou L2-LSP), qui correspond à un second ensemble de valeurs.

Ainsi, lorsqu'un noeud R du réseau Ethernet reçoit une trame NTE, son (ou le) dispositif D analyse le contenu du champ VLAN Tag afin de déterminer s'il désigne sa fonction native ou bien un traitement protocolaire de label GMPLS. Puis, une fois la détermination effectuée le noeud R peut appliquer à la trame NTE reçue le traitement protocolaire approprié.

Le dispositif de traitement D selon l'invention, et notamment son module de traitement MT et son (ou ses) module(s) de détection MD, peuvent être réalisés sous la forme de circuits électroniques, de modules logiciels (ou informatiques), ou d'une combinaison de circuits et de logiciels.

Comme mentionné précédemment, l'invention ne nécessite aucune addition ou modification aux standards protocolaires existants, exception faite des extensions GMPLS nécessaires au support des L2-LSPs (lesquelles ne génèrent pas de complexité en terme de gestion).

En outre, l'invention permet une réduction importante du nombre de champs de contrôle d'encapsulation puisqu'elle permet de supprimer la duplication d'informations de contrôle.

De plus, l'invention permet de conserver en l'état l'infrastructure, la technologie et le protocole d'un réseau, sans modification des standards.

L'invention permet également de bénéficier au sein d'un réseau Ethernet des caractéristiques du protocole GMPLS, et notamment en termes de routage, de signalisation, de protection et d'ingénierie de trafic.

Enfin, l'invention peut être facilement mise en oeuvre par une intégration au moins partielle dans les unités de traitement des réseaux (ou NPU pour « Network Process Unit ») ou dans les processeurs, étant donné que seul le traitement de certains champs de contrôle choisis est modifié (sémantique, format interne) et non le format externe des unités de données de protocole (PDUs).

## Revendications

1. Procédé pour transporter des données dans une trame de données ayant un format de trame de données comportant un champ d'identifiant de réseau local virtuel VLAN dans un réseau de communications supportant au moins un protocole de communication Ethemet utilisant ledit format de trame de données, **caractérisé en ce qu'**on véhicule dans ledit champ d'identifiant de VLAN de ladite trame de données des informations de contrôle, dont la valeur appartient à un ensemble de valeurs correspondant à un traitement protocolaire de label GMPLS, ladite trame de données étant destinée à être reçue par un dispositif de traitement de trames de données (D) comprenant des moyens de détection (MD) agencés, à réception de ladite trame de données, pour déterminer que ladite valeur prise par ledit champ d'identifiant de VLAN contenu dans ladite trame reçue appartient audit ensemble de valeurs correspondant à un traitement protocolaire de label GMPLS, parmi une pluralité d'ensembles de valeurs prédéfinies associés audit champ d'identifiant de VLAN et correspondant respectivement à des traitements protocolaires différents, et des moyens de traitement (MT) agencés pour déterminer ledit traitement protocolaire de label GMPLS, correspondant audit ensemble déterminé par lesdits moyens de détection (MD), devant être appliqué à ladite trame reçue.

2. Procédé selon la revendication 1, **caractérisé en ce que** ledit traitement protocolaire de label GMPLS inclut un traitement de signalisation.

3. Procédé selon la revendication 1, **caractérisé en ce que** ledit traitement protocolaire de label GMPLS inclut un traitement de routage.

4. Procédé selon la revendication 1, **caractérisé en ce que** ledit traitement protocolaire de label GMPLS inclut l'étape consistant à déterminer dans une table de labels d'un noeud du réseau, un identifiant de LSP qui identifie une connexion LSP avec un noeud suivant sur le chemin de la trame.

5. Procédé selon l'une des revendications 1 à 4, **caractérisé en ce que** ladite pluralité d'ensembles de valeurs inclut un ensemble de valeurs correspondant à un traitement selon un protocole Ethemet.

## Claims

1. A method for transporting data within a data frame having a data frame format comprising a virtual local area network VLAN identifier field within a communications network supporting at least one Ethernet communication protocol using said data frame format, **characterized in that** within said VLAN identifier field of said data frame, control information is carried whose value belongs to a set of values corresponding to a GMPLS label protocol process, said data frame being intended to be received by a data frame processing device (D) comprising means of detection (MD) adapted for, upon receiving said data frame, determining that said value taken by said VLAN identifier field contained within said received frame belongs to said set of values corresponding to a GMPLS label protocol process, from among a plurality of sets of predefined values, said sets being associated with said VLAN identifier field and respectively corresponding to different protocol processes, and means of processing (MT) operative to determine said GMPLS label protocol process, corresponding to said set determined by said means of detection (MD), that must be applied to said received frame.

2. A method according to claim 1, **characterized in that** said GMPLS label protocol process includes a signaling process.

3. A method according to claim 1, **characterized in that** said GMPLS label protocol process includes a routing process.

4. A method according to claim 1, **characterized in that** said GMPLS label protocol process includes the step consisting of determining, within a label table of a node of the network, an LSP identifier that identifies an LSP connection with a next node on the frame's path.

5. A method according to one of the claims 1 to 4, **characterized in that** said plurality of values sets includes a set of values corresponding to a process according to an Ethernet protocol.

## Patentansprüche

1. Verfahren für den Transport von Daten in einem Datenrahmen, der ein Datenrahmenformat mit einem Feld der Kennung eines virtuellen Iokalen Netzwerks VLAN in einem Kommunikationsnetzwerk, welches mindestens ein das besagte Datenrahmenformat benutzendes Ethernet-Kommunikationsprotokoll unterstützt, aufweist, **dadurch gekennzeichnet, dass** man in dem besagten Feld der Kennung des VLAN des besagten Datenrahmens Steuerungsinformationen überträgt, deren Wert einer Wertegruppen angehört, welche einer GMPLS-Label-Protokollverarbeitung entspricht, wobei der besagte Datenrahmen für den Empfang an einer Datenrahmenverarbeitungsvorrichtung (D) bestimmt ist, welche Erfassungsmittel (MD), die dazu ausgelegt sind, bei Empfang des besagten Datenrahmens zu bestimmen, dass der besagte von dem besagten in dem besagten empfangenen Rahmen enthaltenen Feld der Kennung des VLAN angenommene Wert der besagten Wertegruppe, welche einer GMPLS-Label-Protokollverarbeitung entspricht, unter einer Mehrzahl von vordefinierten, mit dem besagten Feld der Kennung des VLAN assoziierten und jeweils verschiedenen Protokollverarbeitungen entsprechenden Wertegruppen angehört, sowie Verarbeitungsmittel (MT), die dazu ausgelegt sind, die besagte GMPLS-Label-Protokollverarbeitung, welche der besagten von den besagten Erfassungsmitteln (MD) bestimmten Gruppe angehört und auf den besagten empfangenen Rahmen anzuwenden ist, zu bestimmen, umfasst.

2. Verfahren nach Anspruch 1, **dadurch gekennzeichnet, dass** die besagte GMPLS-Label-Protokollverarbeitung eine Signalisierungsverarbeitung einschließt.

3. Verfahren nach Anspruch 1, **dadurch gekennzeichnet, dass** die besagte GMPLS-Label-Protokollverarbeitung eine Routing-Verarbeitung einschließt.

4. Verfahren nach Anspruch 1, **dadurch gekennzeichnet, dass** die besagte GMPLS-Labels-Protokollverarbeitung einen Schritt, der darin besteht, in einer Labei-Tabelle eines Knotens des Netzwerks eine LSP-Kennung, welche eine LSP-Verbindung mit einem nächsten Knoten auf dem Pfad des Rahmens identifiziert, zu bestimmen, einschließt.

5. Verfahren nach einem der Anspruche 1 bis 4, **dadurch gekennzeichnet, dass** die besagte Mehrzahl von Wertegruppen eine Wertegruppe umfasst, welche einer Verarbeitung gemäß einem Ethernet-Protokoll entspricht.
